# EUROPÄISCHE PATENTSCHRIFT

(11) **EP 2 294 729 B1**
(45) Veröffentlichungstag und Bekanntmachung des Hinweises auf die Patenterteilung: **06.01.2016**
(21) Anmeldenummer: 09749939.6
(22) Anmeldetag: 25.05.2009
(51) Int. Cl.: H04B 10/50, H04B 10/58

(54) **SCHALTUNGSANORDNUNG UND VERFAHREN ZUM ANSTEUERN LICHTEMITTIERENDER BAUELEMENTE ZUR DATENÜBERTRAGUNG**
CIRCUIT ARRANGEMENT AND METHOD FOR CONTROLLING LIGHT EMITTING COMPONENTS
CIRCUITERIE ET PROCÉDÉ D'EXCITATION DE COMPOSANTS ÉLECTROLUMINESCENTS

(30) Priorität: 21.05.2008 DE 102008001940
(43) Veröffentlichungstag der Anmeldung: 16.03.2011
(73) Patentinhaber: Silicon Line GmbH, 80687 München (DE)
(72) Erfinder: GROEPL, Martin, 87527 Sonthofen / Oberallgaeu (DE); HOELTKE, Holger, 80995 Muenchen (DE)
(74) Vertreter: Hofmann, Andreas
(86) Internationale Anmeldenummer: PCT/EP2009/056284
(87) Internationale Veröffentlichungsnummer: WO 2009/141449

(56) Entgegenhaltungen:
- EP-A2- 0 742 651
- US-A- 4 818 896
- US-A- 4 955 081
- US-A- 5 367 587
- US-A- 5 808 770
- US-B1- 6 381 047

## Beschreibung

Die vorliegende Erfindung betrifft grundsätzlich das technische Gebiet der optischen Datenübertragung von mindestens einem lichtemittierenden Bauelement zu mindestens einem lichtempfangenden Bauelement.

Die vorliegende Erfindung betrifft im Speziellen eine Schaltungsanordnung, insbesondere eine Treiberschaltung, gemäß dem Oberbegriff des Anspruchs 1 sowie ein Verfahren gemäß dem Oberbegriff des Anspruchs 9 *(vgl. Druckschrift* US 4 955 081 *aus dem Stand der Technik)*.

Im Rahmen der vorliegenden Erfindung wird unter dem Begriff Licht bzw. lichtemittierend nicht nur der für das Auge sichtbare Bereich der elektromagnetischen Strahlung verstanden, der sich in einem Wellenlängenbereich von etwa 380 Nanometer bis etwa 780 Nanometer erstreckt (, was einer Frequenz von etwa 789 Terahertz bis herab zu etwa 385 Terahertz entspricht).

Vielmehr wird unter dem Begriff Licht bzw. lichtemittierend das gesamte, also auch das für das Auge nicht sichtbare elektromagnetische Wellenlängen- bzw. Frequenzspektrum verstanden, insbesondere der l[nfra]R[ot]-Bereich (Wellenlängenbereich bis zu etwa 2.000 Nanometer bzw. Frequenzbereich bis herab zu etwa 150 Terahertz), zum Beispiel eine Wellenlänge von etwa 850 Nanometer bzw. eine Frequenz von etwa 350 Terahertz.

### Stand der Technik

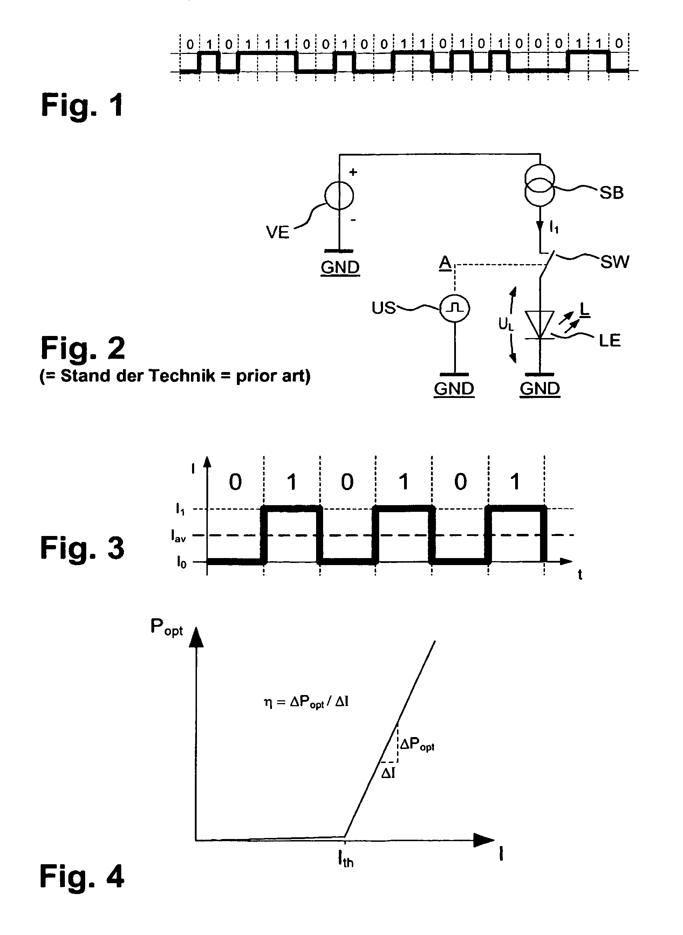

Ein typisches Modulationsverfahren in der optischen Nachrichtentechnik ist das anhand Fig. 1 veranschaulichte NRZ-Modulationsverfahren (NRZ = Non Retum to Zero). Die zu übertragenden Bits werden hierbei entsprechend ihrem Zustand (Pegel 0 entsprechend logisch "0" oder Pegel 1 entsprechend logisch "1") direkt einem lichtemittierenden Bauelement LE (vgl. Fig. 2) als Stromänderung (oder Spannungsänderung) auferlegt.

Die anhand Fig. 2 veranschaulichte, als Treiberschaltung ausgebildete Schaltungsanordnung ist zum Ansteuern des lichtemittierenden Bauelements LE vorgesehen und weist ein Versorgungselement VE in Form einer Spannungsquelle zum Versorgen der Schaltungsanordnung mit Spannung auf.

Zwischen dem Versorgungselement VE und dem lichtemittierenden Bauelement LE ist ein strombegrenzendes Element SB angeordnet, mittels dessen ein Stromwert I₁ bereitgestellt wird.

Zwischen dem strombegrenzenden Element SB und dem lichtemittierenden Bauelement LE ist ein Schaltelement SW angeordnet, das zum Ansteuern des lichtemittierenden Bauelements LE mittels einer Umschaltsteuerung US vorgesehen ist. Das Ausgangssignal A dieser Umschaltsteuerung US steuert das Schaltelement SW.

Wie anhand Fig. 3 veranschaulicht ist, ergibt sich die mittlere elektrische Leistung Pₑₗ am NRZ-modulierten lichtemittierenden Bauelement LE als Produkt aus der Flussspannung U_{L} über das lichtemittierende Bauelement LE und des im Mittel durch das lichtemittierende Bauelement LE fließenden Stroms Iₐᵥ.

Die mittlere optische Ausgangsleistung P_{opt_av} aus dem lichtemittierenden Bauelement LE ergibt sich als Produkt aus dem Wandelwirlaungsgrads η dieses lichtemittierenden Bauelements LE und des zur Verfügung gestellten mittleren elektrischen Stroms Iₐᵥ, also P_{opt_av} = η * Iₐᵥ.

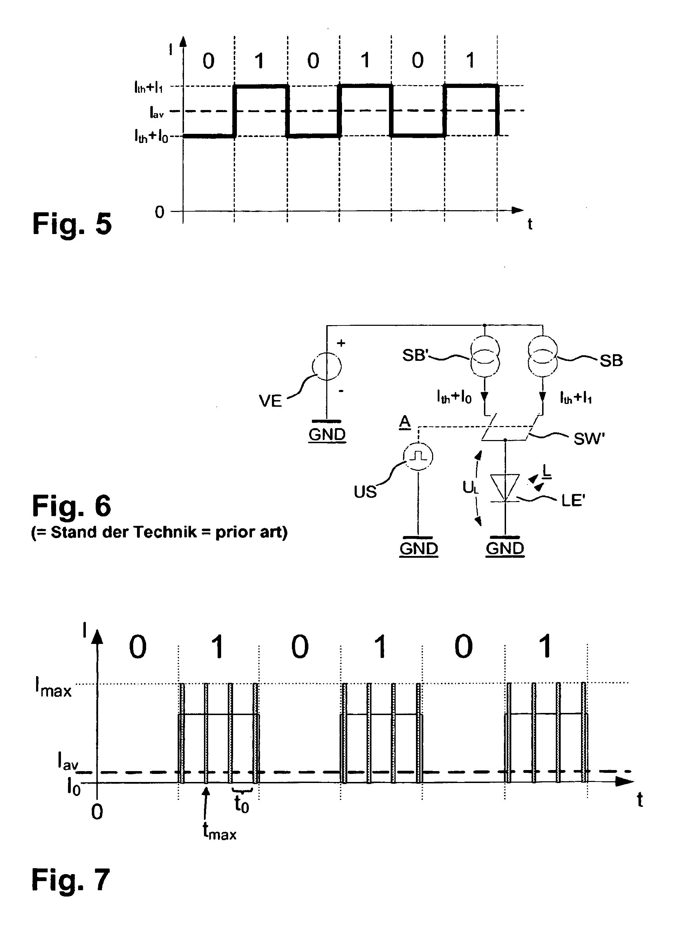

Bei lichtemittierenden Bauelementen LE', insbesondere bei Halbleiterlasern, die einen gewissen Schwellstrom Iₜₕ, aufweisen, bevor der nominale Wandelwirkungsgrad η erreicht wird (vgl. Fig. 4), fällt der Schwellstrom Iₜₕ stets als konstanter Verlust an; insoweit ist der Schwellstrom Iₜₕ stets vorzuhalten, zum Beispiel mittels eines separaten strombegrenzenden Elements SB' (vgl. Fig. 6; im Übrigen wird hinsichtlich Fig. 6 auf Fig. 2 Bezug genommen, wobei das Bezugszeichen SW' ein Umschaltelement oder einen Umschalter bezeichnet).

Aufgrund dieser Notwendigkeit des Vorhaltens des Schwellstroms Iₜₕ erhöht sich die mittlere elektrische Leistung Pₑₗ am NRZ-modulierten lichtemittierenden Bauelement LE' in nachteiliger Weise, wie anhand Fig. 5 veranschaulicht ist.

Vor diesem Hintergrund erscheint ein Entfallen der Notwendigkeit des Vorhaltens des Schwellstroms wünschenswert.

Zum Stand der Technik sei ergänzend auf die Druckschrift US 4 818 896 aufmerksam gemacht.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Schaltungsanordnung der eingangs genannten Art sowie ein Verfahren der eingangs genannten Art so weiterzuentwickeln, dass im Vergleich zum Stand der Technik die Leistungseffizienz deutlich erhöht wird.

Diese Aufgabe wird durch eine Schaltungsanordnung mit den im Anspruch 1 angegebenen Merkmalen sowie durch ein Verfahren mit den im Anspruch 9 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Während gemäß dem Stand der Technik das schwellstrombehaftete lichtemittierende Bauelement während der logischen "1" konstant mit Strom versorgt werden muss, wird erfindungsgemäß die logische "1" als periodisches Schalten zwischen dem Nullwert und einem Maximalstrom zum schwellstrombehafteten lichtemittierenden Bauelement repräsentiert.

Der mittlere Strom durch das lichtemittierende Bauelement ist nunmehr in bevorzugter Weise
- vom gewählten Maximalwert des Stroms und
- vom sogenannten duty cycle, also vom Zeitverhältnis dieses Maximalwerts des Stroms zum Nullwert des Stroms
abhängig.

Die vorliegende Erfindung betrifft schließlich die Verwendung mindestens einer Schaltungsanordnung gemäß der vorstehend dargelegten Art und/oder eines Verfahrens gemäß der vorstehend dargelegten Art beim Beaufschlagen mindestens eines optischen Lichtleiters mit mindestens einem optischen Signal, insbesondere mit Licht, zum Zwecke der Übertragung von Daten
- in mindestens einem, insbesondere mobilen, Kommunikationsgerät, wie etwa in mindestens einem Mobiltelefon,
- in mindestens einer, insbesondere mobilen, Datenverarbeitungseinrichtung, wie etwa in mindestens einem Handheld, in mindestens einem Notebook oder in mindestens einem P[ersonal]D[igital]A[ssistant],
- in mindestens einer, insbesondere mobilen, Datenaufzeichnungs- und/oder -wiedergabeeinrichtung, wie etwa in mindestens einem Camcorder, in mindestens einer Digitalkamera oder in mindestens einem H[igh]D[efinition]T[ele]V[ision], oder
- in mindestens einem Fortbewegungsmittel, wie etwa in mindestens einem Fahrerassistenzsystem oder in mindestens einem Navigationssystem eines Automobils.

### Kurze Beschreibung der Zeichnungen

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 9 nachgeordneten Ansprüche verwiesen, andererseits werden weitere Ausgestaltungen, Merkmale und Vorteile der vorliegenden Erfindung nachstehend unter Anderem anhand der beiden durch Fig. 7 bis Fig. 8B veranschaulichten Ausführungsbeispiele näher erläutert.

Es zeigt:
- Fig. 1: in schematischer Darstellung einen Non Retum to Zero-Code (NRZ-Code) als typisches konventionelles Modulationsverfahren in der optischen Nachrichtentechnik;
- Fig. 2: in schematischer Darstellung ein erstes Ausführungsbeispiel einer gemäß dem Stand der Technik ausgebildeten Schaltungsanordnung zum Beaufschlagen eines optischen Lichtleiters mit Licht, wobei diese Schaltungsanordnung nach dem konventionellen Prinzip der NRZ-Modulation eines lichtemittierenden Bauelements arbeitet;
- Fig. 3: in schematischer Darstellung den mittleren Strom durch ein NRZ-moduliertes lichtemittierendes Bauelement bei gleicher Anzahl von logischen "0" und logischen "1";
- Fig. 4: in schematischer Darstellung den Zusammenhang zwischen eingeprägtem Strom und optischer Ausgangsleistung für ein schwellstrombehaftetes lichtemittierendes Bauelement;
- Fig. 5: in schematischer Darstellung den mittleren Strom durch ein NRZ-moduliertes schwellstrombehaftetes lichtemittierendes Bauelement bei gleicher Anzahl von logischen "0" und logischen "1";
- Fig. 6: in schematischer Darstellung ein zweites Ausführungsbeispiel einer gemäß dem Stand der Technik ausgebildeten Schaltungsanordnung zum Beaufschlagen eines optischen Lichtleiters mit Licht, wobei diese Schaltungsanordnung nach dem konventionellen Prinzip der NRZ-Modulation eines schwellstrombehafteten lichtemittierenden Bauelements arbeitet;
- Fig. 7: in schematischer Darstellung ein gemäß dem Verfahren der vorliegenden Erfindung erfolgendes periodisches Einschalten zwischen dem Nullwert des Stroms und dem Maximalwert des Stroms während der logischen "1";
- Fig. 8A: in schematischer Darstellung ein erstes Ausführungsbeispiel einer gemäß der vorliegenden Erfindung ausgebildeten Schaltungsanordnung zum Beaufschlagen eines (aus Gründen der Übersichtlichkeit nicht dargestellten) optischen Lichtleiters mit Licht, wobei diese Schaltungsanordnung nach dem Verfahren gemäß der vorliegenden Erfindung arbeitet; und
- Fig. 8B: in schematischer Darstellung ein zweites Ausführungsbeispiel einer gemäß der vorliegenden Erfindung ausgebildeten Schaltungsanordnung zum Beaufschlagen eines (aus Gründen der Übersichtlichkeit nicht dargestellten) optischen Lichtleiters mit Licht, wobei diese Schaltungsanordnung nach dem Verfahren gemäß der vorliegenden Erfindung arbeitet.

Gleiche oder ähnliche Ausgestaltungen, Elemente oder Merkmale sind in Fig. 1 bis Fig. 8B mit identischen Bezugszeichen versehen.

### Bester Weg zur Ausführung der vorliegenden Erfindung

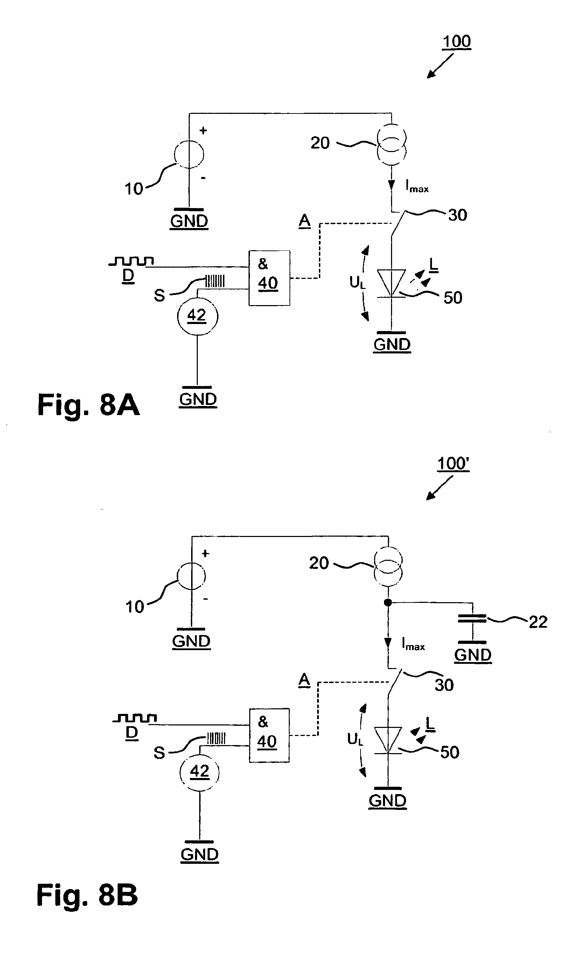

In Fig. 8A und in Fig. 8B ist eine mögliche technische Realisierung der vorliegenden Erfindung dargestellt, die sich durch eine im Vergleich zum Stand der Technik (vgl. Fig. 2 und Fig. 6) deutlich höhere Leistungseffizienz auszeichnet:
Die als Treiberschaltung ausgebildete Schaltungsanordnung 100 (vgl. Fig. 8A) bzw. 100' (vgl. Fig. 8B) ist zum Ansteuern eines mit einem Schwellstrom Iₜₕ behafteten lichtemittierenden Bauelements 50, insbesondere eines elektrooptischen Wandlers, beispielsweise eines Lasers, wie etwa eines Halbleiterlasers, vorgesehen und weist ein Versorgungselement 10 in Form einer Spannungsquelle zum Versorgen der Schaltungsanordnung 100 (vgl. Fig. 8A) bzw. 100' (vgl. Fig. 8B) mit Spannung auf.

Zwischen dem Versorgungselement 10 und dem lichtemittierenden Bauelement 50 ist ein strombegrenzendes Element 20 angeordnet, mittels dessen ein Maximalwert Iₘₐₓ des Stroms bereitgestellt wird.

Dieses strombegrenzende Element 20 kann zum Beispiel
- in Form mindestens eines als Stromquelle geschalteten Transistors oder
- in Form mindestens eines Ohmschen Widerstands
ausgebildet sein. Auch eine Ausgestaltung des strombegrenzenden Elements 20 mit Mischfunktionalität ist denkbar, so etwa in Form mindestens eines Transistors sowohl mit (Konstant-)Stromquellenverhalten als auch mit Resistiv- oder Widerstandsverhalten.

Wenn das strombegrenzende Element 20, zum Beispiel ausgangsseitig, eine kapazitive Stützung in Form eines Kondensators 22 zugeordnet ist, entspricht dieser Maximalstrom Iₘₐₓ zumindest in etwa dem mittleren oder durchschnittlichen Strom Iₐᵥ. Hierbei sind auch Ausführungsbeispiele bzw. Varianten zwischen Iₘₐₓ und Iₐᵥ denkbar.

Zwischen dem strombegrenzenden Element 20 und dem lichtemittierenden Bauelement 50 ist ein Schaltelement 30 angeordnet, das zum Ansteuern des lichtemittierenden Bauelements 50 mittels einer Umschaltsteuerung 40 vorgesehen ist.

Diese Umschaltsteuerung ist zweckmäßigerweise als Gate- oder Torschaltung, beispielsweise als logische UND-Schaltung 40, ausgebildet,
- deren einer Eingang mit den mittels des lichtemittierenden Bauelement 50 zu übertragenden Daten D beaufschlagt wird,
- deren anderer Eingang mit durch einen Oszillator 42 zur Verfügung gestellten Oszillatorsignalen S beaufschlagt wird, wobei diese Oszillatorsignale S den sogenannten duty cycle festlegen, also die zeitliche Relation zwischen dem Maximalwerts Iₘₐₓ des Stroms I und dem Nullwert (I = 0) des Stroms I, und
- deren Ausgangssignal A das Schaltelement 30 steuert.

Um ein möglichst hohes Maß an Signalintegrität in der Datensenke zu erzielen, kann die logische "1" des Datensignals D mit dem durch das Oszillatorsignal S gegebenen Nadelimpuls synchronisiert werden.

Wie auch aus der Darstellung gemäß Fig. 7 hervor geht, wird die logische "1" als periodisches Schalten zwischen dem Nullwert des Stroms I und dem Maximalstrom Iₘₐₓ des Stroms I zum schwellstrombehafteten lichtemittierenden Bauelement 50 repräsentiert.

Der mittlere Strom Iₐᵥ durch das lichtemittierende Bauelement 50 ist also abhängig
- vom Maximalwert Iₘₐₓ des Stroms und
- vom sogenannten duty cycle, also vom Verhältnis der Dauer tₘₐₓ (vgl. Fig. 7) des Maximalwerts Iₘₐₓ des Stroms I zur Dauer t₀ (vgl. Fig. 7) des Nullwerts (I = 0) des Stroms I.

Dieses zeitliche Verhältnis kann exemplarisch kleiner als etwa 1 zu 3 sein, insbesondere etwa 1 zu 9 betragen, was bedeutet, dass die zeitliche Intervalllänge des Nullwerts (I = 0) des Stroms I exemplarisch mehr als das etwa Dreifache der zeitlichen lntervaillänge des Maximalwerts Iₘₐₓ des Stroms I betragen kann; insbesondere kann die zeitliche Intervalllänge des Nullwerts (I = 0) des Stroms I exemplarisch das etwa Neunfache der zeitlichen Intervalllänge des Maximalwerts Iₘₐₓ des Stroms I betragen.

### Bezugszeichenliste

- 100: Schaltungsanordnung, insbesondere Treiberschaltung (= erstes Ausführungsbeispiel; vgl. Fig. 8A)
- 100': Schaltungsanordnung, insbesondere Treiberschaltung (= zweites Ausführungsbeispiel; vgl. Fig. 8B)
- 10: Versorgungselement, insbesondere Spannungsquelle
- 20: strombegrenzendes Element
- 22: kapazitive Stützung des strombegrenzenden Elements 20, insbesondere ausgangsseitig kapazitive Stützung des strombegrenzenden Elements 20, zum Beispiel dem strombegrenzenden Element 20 zugeordneter Kondensator (= zweites Ausführungsbeispiel; vgl. Fig. 8B)
- 30: Schaltelement, insbesondere Schalter
- 40: Umschaltsteuerung, insbesondere Torschaltung, zum Beispiel logische UND-Schaltung
- 42: Oszillator oder Oszillatoreinheit
- 50: mit Schwellstrom Iₜₕ behaftetes lichtemittierendes Bauelement, insbesondere elektrooptischer Wandler, beispielsweise Laser, wie etwa Halbleiterlaser
- A: Ausgangssignal der Umschaltsteuerung 40 bzw. der Umschaltsteuerung US (= Stand der Technik; vgl. Fig. 2 und Fig. 6)
- D: mittels des lichtemittierenden Bauelements 50 zu übertragende Daten(signale)
- GND: Bezugspotential oder Referenzpotential, insbesondere Erdpotential oder Massepotential oder Nullpotential
- I: Strom zum lichtemittierenden Bauelement 50 bzw. zum lichtemittierenden Bauelement LE bzw. LE' (= Stand der Technik; vgl. Fig. 2 bzw. Fig. 6)
- Iₐᵥ: mittlerer Strom oder durchschnittlicher Strom
- Iₘₐₓ: Maximalwert des Stroms I
- Iₜₕ: Schwellstrom des lichtemittierenden Bauelements 50 bzw. des lichtemittierenden Bauelements LE' (= Stand der Technik; vgl. Fig. 6)
- I₀: der logischen "0" entsprechender Strom I
- I₁: der logischen "1" entsprechender Strom I
- LE: lichtemittierendes Bauelement (= Stand der Technik; vgl. Fig. 2)
- LE': mit Schwellstrom Iₜₕ behaftetes lichtemittierendes Bauelement, insbesondere elektrooptischer Wandler, beispielsweise Laser, wie etwa Halbleiterlaser (= Stand der Technik; vgl. Fig. 6)
- Pₒₚₜ: optische Ausgangsleistung des lichtemittierenden Bauelements 50 bzw. des lichtemittierenden Bauelements LE (= Stand der Technik; vgl. Fig. 2)
- P_{opt_av}: mittlere optische Ausgangsleistung des lichtemittierenden Bauelements 50 bzw. des lichtemittierenden Bauelements LE (= Stand der Technik; vgl. Fig. 2)
- S: Signal des Oszillators oder der Oszillatoreinheit 42
- SB: strombegrenzendes Element, insbesondere erstes strombegrenzendes Element (= Stand der Technik; vgl. Fig. 2 und Fig. 6)
- SB': separates oder zweites strombegrenzendes Element zum Bereitstellen des Schwellstroms Iₜₕ (= Stand der Technik; vgl. Fig. 6)
- SW: Schaltelement, insbesondere Schalter (= Stand der Technik; vgl. Fig. 2)
- SW': Umschaltelement, insbesondere Umschalter (= Stand der Technik; vgl. Fig. 6)
- t: Zeit
- tₘₐₓ: Dauer des Maximalwert Iₘₐₓ des Stroms I
- t₀: Dauer des Nullwerts I = 0 des Stroms I
- U_{L}: Flussspannung über das lichtemittierende Bauelement 50 bzw. über das lichtemittierende Bauelement LE bzw. LE' (= Stand der Technik; vgl. Fig. 2 bzw. Fig. 6)
- US: Umschaltsteuerung (= Stand der Technik; vgl. Fig. 2 und Fig. 6)
- VE: Versorgungselement, insbesondere Spannungsquelle (= Stand der Technik; vgl. Fig. 2 und Fig. 6)
- η: Wandelwirkungsgrad, insbesondere nominaler Wandelwirkungsgrad, des lichtemittierenden Bauelements 50 bzw. des lichtemittierenden Bauelements LE bzw. LE' (= Stand der Technik; vgl. Fig. 2 bzw. Fig. 6)

## Patentansprüche

1. Schaltungsanordnung (100; 100'), insbesondere Treiberschaltung, zum Ansteuern mindestens eines mit Schwellstrom (Iₜₕ) behafteten lichtemittierenden Bauelements (50), insbesondere mindestens eines elektrooptischen Wandlers, beispielsweise mindestens eines Lasers, wie etwa mindestens eines Halbleiterlasers, wobei die Schaltungsanordnung (100; 100') aufweist:
- mindestens ein Versorgungselement (10), insbesondere mindestens eine Spannungsquelle, zum Versorgen der Schaltungsanordnung (100; 100') mit Spannung,
- mindestens ein zwischen dem Versorgungselement (10) und dem lichtemittierenden Bauelement (50) angeordnetes strombegrenzendes Element (20), und
- mindestens ein Schaltelement (30) zum Ansteuern des lichtemittierenden Bauelements (50) mittels mindestens einer Umschaltsteuerung (40),
- wobei mittels des strombegrenzenden Elements (20) ein Maximalwert (Iₘₐₓ) des Stroms (I) bereitstellbar ist und
- wobei die logische "1" der mittels des lichtemittierenden Bauelements (50) zu übertragenden Daten (D) als periodisches Schalten zwischen dem Nullwert (I = 0) des Stroms (I) und dem Maximalwert (Iₘₐₓ) des Stroms (I) zum lichtemittierenden Bauelement (50) gegeben ist,
**dadurch gekennzeichnet,**
- **dass** das Schaltelement (30) zwischen dem strombegrenzenden Element (20) und dem lichtemittierenden Bauelement (50) angeordnet ist und
- **dass** das strombegrenzende Element (20) als mindestens ein als Stromquelle geschalteter Transistor ausgebildet ist.

2. Schaltungsanordnung gemäß Anspruch 1, **dadurch gekennzeichnet, dass** der durch das lichtemittierende Bauelement (50) fließende mittlere Strom (Iₐᵥ)
- durch den Maximalwert (Iₘₐₓ) des Stroms (I) und
- durch das Verhältnis der Dauer (tₘₐₓ) des Maximalwerts (Iₘₐₓ) des Stroms (I) zur Dauer (t₀) des Nullwerts (I = 0) des Stroms (I)
gegeben ist.

3. Schaltungsanordnung (100') gemäß Anspruch 1 oder 2, **dadurch gekennzeichnet, dass** das strombegrenzende Element (20), zum Beispiel mittels mindestens eines Kondensators (22), kapazitiv gestützt ist, insbesondere ausgangsseitig kapazitiv gestützt ist,

4. Schaltungsanordnung gemäß Anspruch 3, **dadurch gekennzeichnet, dass** bei kapazitiver Stützung (22) des strombegrenzenden Elements (20) der Maximalwert (Iₘₐₓ) des Stroms (I) im Wesentlichen durch den mittleren Strom (Iₐᵥ) gegeben ist.

5. Schaltungsanordnung gemäß mindestens einem der Ansprüche 1 bis 4, **dadurch gekennzeichnet, dass** das Verhältnis der Dauer (tₘₐₓ) des Maximalwerts (Iₘₐₓ) des Stroms (I) zur Dauer (t₀) des Nullwerts (I = 0) des Stroms (I) kleiner als etwa 1 zu 3 ist, insbesondere etwa 1 zu 9 beträgt.

6. Schaltungsanordnung gemäß mindestens einem der Ansprüche 1 bis 5, **dadurch gekennzeichnet, dass** das strombegrenzende Element (20) mit Mischfunktionalität, nämlich als Transistor sowohl mit (Konstant-)Stromquellenverhalten als auch mit Resistiv- oder Widerstandsverhalten, ausgebildet ist.

7. Schaltungsanordnung gemäß mindestens einem der Ansprüche 1 bis 6, **dadurch gekennzeichnet, dass** die Umschaltsteuerung (40) mindestens eine Torschaltung aufweist,
- deren einer Eingang mit den Daten (D) beaufschlagbar ist,
- deren anderer Eingang mit durch mindestens eine Oszillatoreinheit (42) zur Verfügung stellbaren, insbesondere das Verhältnis der Dauer (tₘₐₓ) des Maximalwerts (Iₘₐₓ) des Stroms (I) zur Dauer (t₀) des Nullwerts (I = 0) des Stroms (I) bestimmenden, Oszillatorsignalen (S) beaufschlagbar ist und
- deren Ausgangssignal (A) das Schaltelement (30) steuert.

8. Schaltungsanordnung gemäß Anspruch 7, **dadurch gekennzeichnet, dass** die Torschaltung (40) als mindestens eine logische UND-Schaltung ausgebildet ist.

9. Verfahren zum Ansteuern mindestens eines mit Schwellstrom (Iₜₕ) behafteten lichtemittierenden Bauelements (50), insbesondere mindestens eines elektrooptischen Wandlers, beispielsweise mindestens eines Lasers, wie etwa mindestens eines Halbleiterlasers,
- wobei die Schaltungsanordnung (100; 100') mittels mindestens eines Versorgungselements (10), insbesondere mittels mindestens einer Spannungsquelle, mit Spannung versorgt wird,
- wobei das lichtemittierende Bauelement (50) mittels mindestens eines Schaltelements (30) über mindestens eine Umschaltsteuerung (40) angesteuert wird,
- wobei mittels mindestens eines strombegrenzenden Elements (20) ein Maximalwert (Iₘₐₓ) des Stroms (I) bereitgestellt wird und
- wobei die logische "1" der mittels des lichtemittierenden Bauelements (50) zu übertragenden Daten (D) durch periodisches Schalten zwischen dem Nullwert (I = 0) des Stroms (I) und dem Maximalwert (Iₘₐₓ) des Stroms (I) zum lichtemittierenden Bauelement (50) repräsentiert wird,
**dadurch gekennzeichnet,**
- **dass** das Schaltelement (30) zwischen dem strombegrenzenden Element (20) und dem lichtemittierenden Bauelement (50) angeordnet ist und
- **dass** das strombegrenzende Element (20) als mindestens ein als Stromquelle geschalteter Transistor ausgebildet ist.

10. Verfahren gemäß Anspruch 9, **dadurch gekennzeichnet, dass** der durch das lichtemittierende Bauelement (50) fließende mittlere Strom (Iₐᵥ)
- durch den Maximalwert (Iₘₐₓ) des Stroms (I) und
- durch das Verhältnis der Dauer (tₘₐₓ) des Maximalwerts (Iₘₐₓ) des Stroms (I) zur Dauer (t₀) des Nullwerts (I = 0) des Stroms (I)
gegeben ist.

11. Verfahren gemäß Anspruch 10, **dadurch gekennzeichnet, dass** bei kapazitiver Stützung (22) des strombegrenzenden Elements (20), insbesondere bei ausgangsseitig kapazitiver Stützung (22) des strombegrenzenden Elements (20), der Maximalwert (Iₘₐₓ) des Stroms (I) im Wesentlichen durch den mittleren Strom (Iₐᵥ) gegeben ist.

12. Verfahren gemäß mindestens einem der Ansprüche 9 bis 11, **dadurch gekennzeichnet, dass** das Verhältnis der Dauer (tₘₐₓ) des Maximalwerts (Iₘₐₓ) des Stroms (I) zur Dauer (t₀) des Nullwerts (I = 0) des Stroms (I) kleiner als etwa 1 zu 3 ist, insbesondere etwa 1 zu 9 beträgt.

13. Verfahren gemäß mindestens einem der Ansprüche 9 bis 12, **dadurch gekennzeichnet,**
- **dass** der eine Eingang der, insbesondere durch mindestens eine Torschaltung repräsentierten, zum Beispiel durch mindestens eine logische UND-Schaltung repräsentierten, Umschaltsteuerung (40) mit den Daten (D) beaufschlagt wird,
- **dass** der andere Eingang der Umschaltsteuerung (40) mit durch mindestens eine Oszillatoreinheit (42) zur Verfügung gestellten, insbesondere das Verhältnis der Dauer (tₘₐₓ) des Maximalwerts (Iₘₐₓ) des Stroms (I) zur Dauer (t₀) des Nullwerts (I = 0) des Stroms (I) bestimmenden, Oszillatorsignalen (S) beaufschlagt wird und
- **dass** das Ausgangssignal (A) der Umschaltsteuerung (40) das Schaltelement (30) steuert.

14. Verwendung mindestens einer Schaltungsanordnung gemäß mindestens einem der Ansprüche 1 bis 8 und/oder eines Verfahrens gemäß mindestens einem der Ansprüche 9 bis 13 beim Beaufschlagen mindestens eines optischen Lichtleiters mit mindestens einem optischen Signal, insbesondere mit Licht (L), zum Zwecke der Übertragung von Daten
- in mindestens einer, insbesondere mobilen, Telekommunikationsanlage, zum Beispiel in mindestens einem Kommunikationsgerät, wie etwa in mindestens einem Mobiltelefon,
- in mindestens einer, insbesondere mobilen, Datenkommunikationsanlage oder in mindestens einer, insbesondere mobilen, Datenverarbeitungseinrichtung, zum Beispiel in mindestens einem Handheld, in mindestens einem Notebook oder in mindestens einem P[ersonal]D[igital]A[ssistant],
- in mindestens einer, insbesondere mobilen, Datenaufzeichnungs- und/oder -wiedergabeeinrichtung, zum Beispiel in mindestens einem Camcorder, in mindestens einer Digitalkamera oder in mindestens einem H[igh]D[efinition]T[ele]V[ision], oder
- in mindestens einem Fortbewegungsmittel, zum Beispiel in mindestens einem Fahrerassistenzsystem oder in mindestens einem Navigationssystem eines Automobils.

## Claims

1. A circuit arrangement (100; 100'), in particular a driver circuit, for controlling at least one light-emitting component (50), to which a threshold current (Iₜₕ) is applied, in particular for controlling at least one electro-optical transducer, for example at least one laser, such as at least one semiconductor laser, wherein the circuit arrangement (100; 100') comprises:
- at least one supply element (10), in particular at least one voltage source, for supplying the circuit arrangement (100; 100') with voltage,
- at least one current-limiting element (20) being arranged between the supply element (10) and the light-emitting component (50), and
- at least one switching element (30) for controlling the light-emitting component (50) by means of at least one switching controller (40),
- wherein a maximum value (Iₘₐₓ) of the current (I) is providable by means of the current-limiting element (20), and
- wherein the logical "1" of data (D) to be transmitted by means of the light-emitting component (50) is given as periodic switching between the zero value (I = 0) of the current (I) and the maximum value (Iₘₐₓ) of the current (I) supplied to the light-emitting component (50),
**characterized in** n
- that the switching element (30) is arranged between the current-limiting element (20) and the light-emitting component (50), and
- that the current-limiting element (20) is embodied as at least one transistor connected as current source.

2. The circuit arrangement according to claim 1, **characterized in that** the average current (Iₐᵥ) flowing through the light-emitting component (50) is given
- by the maximum value (Iₘₐₓ) of the current (I) and
- by the ratio of the length of time (tₘₐₓ) of the maximum value (Iₘₐₓ) of the current (I) to the length of time (t₀) of the zero value (I = 0) of the current (I).

3. The circuit arrangement (100') according to claim 1 or 2, **characterized in that** the current-limiting element (20) is supported for example by means of at least one decoupling capacitor (22), in particular on the output side.

4. The circuit arrangement according to claim 3, **characterized in that**, in case of capacitive support (22) of the current-limiting element (20), the maximum value (Iₘₐₓ) of the current (I) is given essentially by the average current (Iₐᵥ).

5. The circuit arrangement according to at least one of claims 1 to 4, **characterized in that** the ratio of the length of time (tₘₐₓ) of the maximum value (Iₘₐₓ) of the current (I) to the length of time (t₀) of the zero value (I = 0) of the current (I) is less than about 1 to 3, and in particular is about 1 to 9.

6. The circuit arrangement according to at least one of claims 1 to 5, **characterized in that** the current-limiting element (20) is embodied with mixing functionality, namely as transistor with (constant) current source behaviour as well as with resistive or resistor behaviour.

7. The circuit arrangement according to at least one of claims 1 to 6, **characterized in that** the switching controller (40) comprises at least one gate circuit, wherein
- the data (D) is supplyable to one input of the gate circuit,
- oscillator signals (S) are supplyable to the other input of the gate circuit, said oscillator signals (S) being providable by at least one oscillator unit (42), in particular determining the ratio of the length of time (tₘₐₓ) of the maximum value (Iₘₐₓ) of the current (I) to the length of time (t₀) of the zero value (I = 0) of the current (I), and
- the output signal (A) of the gate circuit controls the switching element (30).

8. The circuit arrangement according to claim 7, **characterized in that** the gate circuit (40) is embodied as at least one logical AND circuit.

9. A method for controlling at least one light-emitting component (50), to which a threshold current (Iₜₕ) is applied, in particular for controlling at least one electro-optical transducer, for example at least one laser, such as at least one semiconductor laser,
- with the circuit arrangement (100; 100') being supplied with voltage by means of at least one supply element (10), in particular by means of at least one voltage source, and
- with the light-emitting component (50) being controlled by means of at least one switching element (30) using at least one switching controller (40),
- wherein a maximum value (Iₘₐₓ) of the current (I) is provided by means of at least one current-limiting element (20), and
- wherein the logical "1" of the data (D) to be transmitted by means of the light-emitting component (50) is represented by periodic switching between the zero value (I = 0) of the current (I) and the maximum value (Iₘₐₓ) of the current (I) supplied to the light-emitting component (50),
**characterized in n**
- that the switching element (30) is arranged between the current-limiting element (20) and the light-emitting component (50), and
- that the current-limiting element (20) is embodied as at least one transistor connected as current source.

10. The method according to claim 9, **characterized in that** the average current (Iₐᵥ) flowing through the light-emitting component (50) is given
- by the maximum value (Iₘₐₓ) of the current (I) and
- by the ratio of the length of time (tₘₐₓ) of the maximum value (Iₘₐₓ) of the current (I) to the length of time (t₀) of the zero value (I = 0) of the current (I).

11. The method according to claim 10, **characterized in that**, in case of capacitive support (22) of the current-limiting element (20), in particular in case of capacitive support (22) of the current-limiting element (20) on the output side, the maximum value (Iₘₐₓ) of the current (I) is given essentially by the average current (Iₐᵥ).

12. The method according to at least one of claims 9 to 11, **characterized in that** the ratio of the length of time (tₘₐₓ) of the maximum value (Iₘₐₓ) of the current (I) to the length of time (t₀) of the zero value (I = 0) of the current (I) is less than about 1 to 3, and in particular is about 1 to 9.

13. The method according to at least one of claims 9 to 12, **characterized in**
- **that** one input of the switching controller (40) is supplied with the data (D), said switching controller (40) in particular being represented by at least one gate circuit, for example being represented by at least one logical AND circuit,
- **that** the other input of the switching controller (40) is supplied with oscillator signals (S) being provided by at least one oscillator unit (42), in particular determining the ratio of the length of time (tₘₐₓ) of the maximum value (Iₘₐₓ) of the current (I) to the length of time (t₀) of the zero value (I = 0) of the current (I),
and
- **that** the output signal (A) of the switching controller (40) controls the switching element (30).

14. Use of at least one circuit arrangement according to at least one of claims 1 to 8 and/or of a method according to at least one of claims 9 to 13 for supplying at least one optical signal, in particular light (L), to at least one optical light conductor for the purpose of transmission of data
- in at least one, in particular mobile, telecommunication system, for example in at least one communication device, such as in at least one mobile telephone,
- in at least one, in particular mobile, data communication system or in at least one, in particular mobile, data processing device, for example in at least one handheld, in at least one notebook or in at least one P[ersonla]D[igital]A[ssistant],
- in at least one, in particular mobile, data recording and/or reproducing device, for example in at least one camcorder, in at least one digital camera or in at least one H[igh]D[efinition]T[ele]V[ision], or
- in at least one transportation means, for example in at least one driver assistance system or in at least one navigation system of an automobile.

## Revendications

1. Circuiterie (100 ; 100'), en particulier circuit d'excitation, pour l'excitation d'au moins un composant électroluminescent (50) à courant de seuil (Iₜₕ), en particulier d'au moins un convertisseur électro-optique, par exemple d'au moins un laser, tel qu'un laser à semi-conducteur, ladite circuiterie (100 ; 100') présentant :
- au moins un élément d'alimentation (10), en particulier au moins une source de tension, pour alimenter la circuiterie (100 ; 100') en tension,
- au moins un élément limiteur de courant (20) placé entre l'élément d'alimentation (10) et le composant électroluminescent (50), et
- au moins un élément de commutation (30) pour l'excitation du composant électroluminescent (50) par l'intermédiaire d'au moins une commande de commutation (40),
- une valeur maximale (Iₘₐₓ) du courant (I) étant fournie par l'intermédiaire de l'élément limiteur de courant (20) et
- la logique "1" des données (D) à transmettre par l'intermédiaire du composant électroluminescent (50) étant représentée par commutation périodique entre la valeur zéro (I = 0) du courant (I) et la valeur maximale (Iₘₐₓ) du courant (I) appliqué au composant électroluminescent (50),
**caractérisée en ce**
- **que** l'élément de commutation (30) est placé entre l'élément limiteur de courant (20) et le composant électroluminescent (50) et
- **que** l'élément limiteur de courant (20) est conçu au moins en tant que transistor commuté en tant que source de courant.

2. Circuiterie selon la revendication 1, **caractérisée en ce que** le courant moyen (Iₐᵥ) circulant à travers le composant électroluminescent (50) est fourni
- par la valeur maximale (Iₘₐₓ) du courant (I) et
- par le rapport de la durée (tₘₐₓ) de la valeur maximale (Iₘₐₓ) du courant (I) à la durée (t₀) de la valeur zéro (I = 0) du courant (I).

3. Circuiterie (100') selon la revendication 1 ou 2, **caractérisée en ce que** l'élément limiteur de courant (20) est supporté sur le plan capacitif, par exemple par l'intermédiaire d'au moins un condensateur (22), et est supporté sur le plan capacitif côté sortie en particulier.

4. Circuiterie selon la revendication 3, **caractérisée en ce que** lors du support capacitif (22) de l'élément limiteur de courant (20), la valeur maximale (Iₘₐₓ) du courant (I) est fournie essentiellement par le courant moyen (Iₐᵥ).

5. Circuiterie selon au moins l'une des revendications 1 à 4, **caractérisée en ce que** le rapport de la durée (tₘₐₓ) de la valeur maximale (Iₘₐₓ) du courant (I) à la durée (t₀) de la valeur zéro (I = 0) du courant (I) est inférieur à environ 1 à 3, est en particulier environ d'1 à 9.

6. Circuiterie selon au moins l'une des revendications 1 à 5, **caractérisée en ce que** l'élément limiteur de courant (20) est conçu avec une fonctionnalité mixte, à savoir en tant que transistor avec un comportement de source de courant (constante) mais aussi avec un comportement résistif ou de résistance.

7. Circuiterie selon au moins l'une des revendications 1 à 6, **caractérisée en ce que** la commande de commutation (40) présente au moins un circuit tout ou rien,
- dont une entrée peut recevoir les données (D),
- dont l'autre entrée peut recevoir des signaux d'oscillateur (S) pouvant être fournis par au moins une unité d'oscillateur (42), déterminant en particulier le rapport de la durée (tₘₐₓ) de la valeur maximale (Iₘₐₓ) du courant (I) à la durée (t₀) de la valeur zéro (I = 0) du courant (I) et
- dont le signal de sortie (A) commande l'élément de commutation (30).

8. Circuiterie selon la revendication 7, **caractérisée en ce que** le circuit tout ou rien (40) est conçu au moins en tant que circuit ET logique.

9. Procédé d'excitation d'au moins un composant électroluminescent (50) à courant de seuil (Iₜₕ), en particulier d'au moins un convertisseur électro-optique, par exemple d'au moins un laser, tel qu'un laser à semi-conducteur,
- la circuiterie (100 ; 100') étant alimentée en tension par l'intermédiaire d'au moins un élément d'alimentation (10), en particulier par l'intermédiaire d'au moins une source de tension,
- le composant électroluminescent (50) étant excité par l'intermédiaire d'au moins un élément de commutation (30) par le biais d'au moins une commande de commutation (40),
- une valeur maximale (Iₘₐₓ) du courant (I) étant fournie par l'intermédiaire d'au moins un élément limiteur de courant (20),
- la logique "1" des données (D) à transmettre par l'intermédiaire du composant électroluminescent (50) étant représentée par commutation périodique entre la valeur zéro (I = 0) du courant (I) et la valeur maximale (Iₘₐₓ) du courant (I) appliqué au composant électroluminescent (50),
**caractérisé en ce**
- **que** l'élément de commutation (30) est placé entre l'élément limiteur de courant (20) et le composant électroluminescent (50) et
- **que** l'élément limiteur de courant (20) est conçu au moins en tant que transistor commuté en tant que source de courant.

10. Procédé selon la revendication 9, **caractérisé en ce que** le courant moyen (Iₐᵥ) circulant à travers le composant électroluminescent (50) est fourni
- par la valeur maximale (Iₘₐₓ) du courant (I) et
- par le rapport de la durée (tₘₐₓ) de la valeur maximale (Iₘₐₓ) du courant (I) à la durée (t₀) de la valeur zéro (I = 0) du courant (I).

11. Procédé selon la revendication 10, **caractérisé en ce que** lors du support capacitif (22) de l'élément limiteur de courant (20), en particulier lors du support capacitif (22) côté sortie de l'élément limiteur de courant (20), la valeur maximale (Iₘₐₓ) du courant (I) est fournie essentiellement par le courant moyen (Iₐᵥ).

12. Procédé selon au moins l'une des revendications 9 à 11, **caractérisé en ce que** le rapport de la durée (tₘₐₓ) de la valeur maximale (Iₘₐₓ) du courant (I) à la durée (t₀) de la valeur zéro (I = 0) du courant (I) est inférieur à environ 1 à 3, est en particulier environ d'1 à 9.

13. Procédé selon au moins l'une des revendications 9 à 12, **caractérisé en ce**
- **que** l'une entrée de la commande de commutation (40) représentée en particulier par au moins un circuit tout ou rien, représentée par exemple par au moins un circuit ET logique, reçoit les données (D),
- **que** l'autre entrée de la commande de commutation (40) peut recevoir des signaux d'oscillateur (S) fournis par au moins une unité d'oscillateur (42), déterminant en particulier le rapport de la durée (tₘₐₓ) de la valeur maximale (Iₘₐₓ) du courant (I) à la durée (t₀) de la valeur zéro (I = 0) du courant (I) et
- **que** le signal de sortie (A) du circuit tout ou rien (40) commande l'élément de commutation (30).

14. Emploi d'au moins une circuiterie selon au moins l'une des revendications 1 à 8 et/ou d'un procédé selon au moins l'une des revendications 9 à 13 lors de la fourniture d'au moins un signal, en particulier de lumière (L), à au moins un guide d'ondes optiques à des fins de transmission de données,
- dans au moins un système de télécommunications, en particulier mobile, par exemple dans au moins un appareil de communication, comme dans au moins un téléphone mobile,
- dans au moins un système de communication de données en particulier mobile ou dans au moins un dispositif de traitement de données, en particulier mobile, par exemple dans au moins un appareil portatif, dans au moins un notebook ou dans au moins un assistant numérique P[ersonal]D[igital]A[ssistant],
- dans au moins un dispositif d'enregistrement et/ou de restitution de données, en particulier mobile, par exemple dans au moins un caméscope, dans au moins une caméra numérique ou dans au moins une télévision haute définition H[igh]D[efinition]T[ele]V[ision], ou
- dans au moins un moyen de déplacement, par exemple dans au moins un système d'assistance au conducteur ou dans au moins un système de navigation d'une automobile.
